# EUROPEAN PATENT SPECIFICATION

(11) **EP 1 161 803 B1**
(45) Date of publication and mention of the grant of the patent: **20.08.2003**
(21) Application number: 00900745.1
(22) Date of filing: 24.01.2000
(51) Int. Cl.: H04B 7/155, H04L 27/26

(54) **METHOD OF, AND APPARATUS FOR, THE TRANSMISSION OF A PLURALITY OF SIGNALS**
VERFAHREN UND VORRICHTUNG ZUR ÜBERTRAGUNG EINER VIELZAHL VON SIGNALEN
PROCEDE ET APPAREIL DE TRANSMISSION D'UNE PLURALITE DE SIGNAUX

(30) Priority: 22.01.1999 GB 9901356
(43) Date of publication of application: 12.12.2001
(73) Proprietor: CENTRAL RESEARCH LABORATORIES LIMITED, Hayes, Middlesex, UB3 1HH (GB)
(72) Inventor: HARKER, Brett, James, Hayes, Middlesex UB4 0AY (GB)
(74) Representative: Sharp, Alan Cooper
(86) International application number: GB0000180
(87) International publication number: WO00044112

(56) References cited:
- EP-A- 0 017 343
- EP-A- 0 762 661
- EP-A- 0 886 361
- US-A- 5 428 600

## Description

The present invention relates to a method of, and apparatus for, the transmission of a plurality of signals. It relates particularly, but not exclusively, to the simultaneous transmission and distribution of Coded Frequency Division Multiplexing (COFDM) signals in a Cellular Access to Broadband Services and Interactive Television (CABSINET) microcell.

Transmission and distribution of digital video, for example to set-top boxes, in private homes (or elsewhere) is increasing due to schemes such as video on demand. In the past, such video signals have been transmitted via cable. However, technology is now available to transmit video signals via RF means to a number of end users. This development offers the advantage of not having to lay cables to individual private homes, which is labour intensive and causes environmental damage. Digital video signals are now able to be broadcast, via a base-station, (which transmits signals) to a number of micro-cells. These micro-cells may include a radio-repeater and a number of set-top boxes adapted to receive the transmitted digital video signals.

UK Patent GB 2 318 947 describes an intelligent digital beamformer and phased antenna array for installation in a satellite. The system provides multiple active beams within a footprint region for communications with a user on the earth surface. There is no reference to use the beamformer in a system which is capable of simultaneous transmission and distribution of COFDM signals.

US Patent 5 428 600 describes a system which simultaneously extracts, in the frequency domain, a narrow band BFSK carrier (received from Transmitter A) and de-spreads or correlates a wide-band CDMA signal (received from Transmitter Bi). The two signals are combined, using a phase modulator, to produce a frequency spectrum of a wide-band CDMA signal and BFSK carrier signal. The BFSK carrier is then used by receiving station B to assist with data recovery and demodulation.

An aim of the system described in the aforementioned US Patent is to extract the carrier signal and data from two remote sources for CDMA/FDMA and then to re-combine the signals for use by a receiving station.

European Patent Application No. EP 762 661 A2 discloses a channelised multi-carrier signal processor for equalising power levels of individual carriers of a multi-carrier signal to within a predetermined dynamic range. The signal processor splits a plurality of channels into individual channels using a 1:N power splitting stage and a mixing stage for analogue signal processing. The major disadvantage of this system is that there is significant degradation in the RF front-end receiver signal which is caused by the 1:N power splitter.

An aim of the present invention is to provide a method of, and apparatus for, the transmission and distribution of coded orthogonal frequency division multiplexed signals in order to transmit digital video signals to a plurality of end users.

According to a first aspect of the invention there is provided a method for the transmission of a plurality of coded orthogonal frequency division multiplexed signals, the method including the steps of: a) receiving a plurality of input signals; b) attenuating the input signals; c) band-pass filtering the attenuated signals; d) mixing the band-pass filtered and attenuated signals with a single frequency signal to provide mixed signals in a predetermined bandwith; e) attenuating the mixed signals; f) band-pass filtering the signals attenuated in step e); g) pre-amplifying the band-pass filtered signals from step f); h) attenuating the pre-amplified signals; i) amplifying the attenuated pre-amplified signals; j) band-pass filtering the signals amplified in step i; and k) transmitting the band-pass filtered signals from step j) to a plurality of receivers, so that each receiver, when suitably tuned, receives a separate transmitted signal.

Most preferably the signals are in the microwave region of the electromagnetic spectrum.

The method may also include the steps of providing static discharge protection and antenna port mismatch protection. One way of achieving this is to provide a DC block at a suitable point in the circuit.

The invention can be used to receive and transmit additional signals used for the synchronisation of, for example, data symbol rates and centre frequencies. These additional signals may be COFDM signals.

According to a second aspect of the invention there is provided an apparatus for the transmission of a plurality of coded orthogonal frequency division multiplexed signals including: a) means for receiving a plurality of input signals; b) first attenuating means for attenuating the said input signals; c) first band-pass filtering means for band-pass filtering the attenuated signals; d) single frequency generation means for generating a single frequency signal; e) mixing means for mixing the frequency of the first band-pass filtered signals with a single frequency signal to provide mixed signals in a predetermined bandwidth; f) second attenuating means for attenuating the mixed signals; g) second band-pass filtering means for band-pass filtering the attenuated mixed signals; h) pre-amplifying means for pre-amplifying the second band-pass filtered signals; i) third attenuating means for attenuating the pre-amplified signals; j) amplifying means for amplifying the attenuated pre-amplified signals; k) third band-pass filtering means for band-pass filtering the signals amplified in step j); and l) means for transmitting the third band-pass filtered signals to a plurality of receivers, so that each receiver, when suitably tuned, receives a separate transmitted signal.

The apparatus may also include dc signal blocking means for protecting the internal RF circuitry from static or other discharges.

Preferably the first attenuating means is an input switched intermediate frequency (i.e., generally higher in frequency than the data frequency, but lower in frequency than the carrier) attenuator, operating in the 0 dB to -70 dB range.

Preferably the mixing means for translating the frequency of the signals is a double balanced transmit mixer.

Preferably antenna port mismatch protection means such as a circulator may also be included in the apparatus.

The amplifying means for amplifying the signal may be an RF high power amplifier.

Preferably the means for transmitting the COFDM signal is a dual polarisation antenna.

Preferably the single frequency generation means includes a phase-locked oscillator, a high-stability oven controlled crystal oscillator and a band-pass filter.

Preferably the band-pass filter means is a low insertion loss band-pass filter such as, for example, an inter-digital filter.

A power supply means is provided in use and this may include: a linear power supply which may be used to provide a regulated power supply; and a switched mode power supply which may also be used to provide a regulated power supply.

An embodiment of the invention will now be described, by way of example only, with reference to the accompanying Figures, in which:-
Figure 1 shows a block diagram of a 5.8 GHz radio repeater; and
Figure 2 shows a block diagram of a system incorporating the repeater.

A 5.8 GHz radio repeater 2 having five stages is shown. It is capable of simultaneous transmission and distribution of fourteen Coded Orthogonal Frequency Division Multiplexed (COFDM) signals and one signalling channel in a Cellular Access to Broadband Services and Interactive Television (CABSINET) microcell. The repeater may be modified to handle more or less signals.

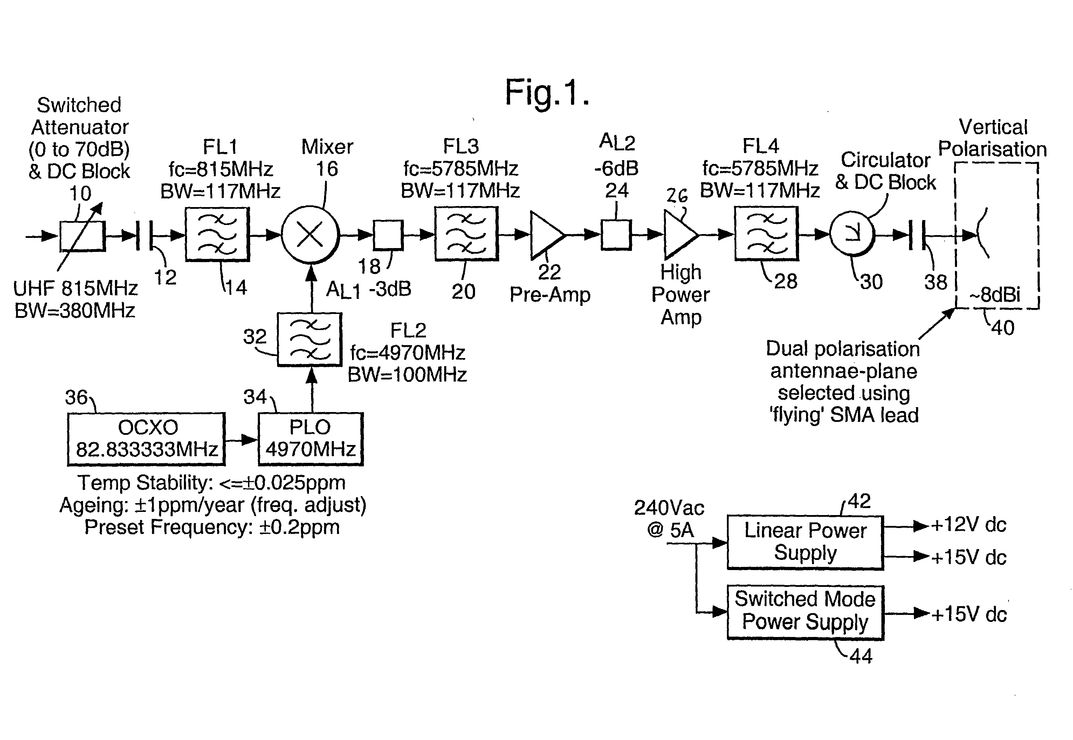

Referring in detail to Figure 1, the 5.8 GHz radio repeater includes an input switched intermediate frequency (IF) attenuator 10 (0 dB to -70 dB range), an 815 MHz band-pass filter 14 (FL1), an up-converting mixer 16, a high stability Oven Controlled Crystal Oscillator 36 (OCXO), a 4970 MHz phase locked oscillator 34 (PLO), a 4970 MHz band-pass filter 32 (FL2), 5785 MHz band-pass filters 20, 28 (FL3, FL4), a 5785 MHz pre-amplifier 22, a 5785 MHz high power amplifier 26 and a 5785 MHz circulator 30.

Following IF attenuation and band-pass filtering with FL1, up-conversion of the 755 MHz to 875 MHz band to the 5725 MHz to 5845 MHz band is performed by the double balanced transmit mixer 16. The mixer output is filtered with FL3, a low insertion loss band-pass filter 20 such as, for example, an inter-digital filter. This filter 20 suppresses the local oscillator (LO) feedthrough from the mixer, and selects the upper sideband. The transmit buffer 22 pre-amplifies the selected sideband, easing the gain requirement for the 5785 MHz RF high power amplifier.

FL4, a low insertion loss band-pass filter such as, for example, an inter-digital filter, is used to further suppress both the transmit LO leakage and the undesired sideband.

The RF high power amplifier 26 boosts the transmit signal to a level of approximately +20 dBm (dB signal gain with respect to 1 mW) per channel, as measured at an antenna output SMA connection port. To satisfy the heavy supply current requirement of the high power amplifier 26, a switched mode power supply 44 is used.

Following FL4, a circulator 30 and DC block 38 are used to provide antenna port mismatch protection and static discharge protection, respectively.

The 8 dBi (dB gain with respect to an isotropic radiator) dual polarised directive antenna 40 consists of a linear array of stacked co-planar micro-strip patch antennae. The antenna 40 achieves an azimuth coverage of about 90 degrees.

The phase-locked oscillator (PLO) provides a tuneable (±2%) 4970 MHz LO signal from a +15 V 400 mA DC supply. The PLO 4970 MHz output is derived from a high performance 82.833333 MHz Oven Controlled Crystal Oscillator (OCXO). This OCXO has a temperature stability of ±0.025ppm over -20 to +60°C, ageing ±1ppm per year and pre-set frequency ±0.2ppm.

The 4970 MHz PLO produces over +10 dBm of output drive power from a 0 dBm input drive power. Phase noise performance is better than -96 dBc/Hz at 1 KHz offset. Output spurious signals are better than -73dBc (dB signal gain with respect to the signal carrier) at 275KHz, and output harmonics are better than -70dBc. FL2, a low insertion loss band-pass filter such as, for example, an inter-digital filter, is used to suppress undesired LO output harmonics. Following band-pass filtering with FL2, the 4970 MHz LO signal is applied to the up-converting mixer LO input port.

Two separate linear power supplies are used to provide regulated supplies to the OCXO and PLO. A switched mode power supply (SMPS) is used to provide a regulated supply to both the pre-amplifier and high power amplifier. All power supply units are 230 V ac 50/60 Hz mains driven and provide satisfactory ripple rejection and load regulation.

Tables 1 to 3 give the electrical, environmental and mechanical specifications, respectively, of the 5.8 GHz radio repeater of Figure 1 for the transmission and distribution of 14 COFDM signals.

**Table 1 -**

| | | | | | | | |
|---|---|---|---|---|---|---|---|
| LO = 4970MHz, IF = 815MHz, RF = 5785MHz, Z o = 50Ω, Unless Otherwise Specified | | | | | | | |

| Electrical Specifications | | | | | | | |
|---|---|---|---|---|---|---|---|
| | | **ALL GRADES** | | | | | |
| **PARAMETER** | | **SYMBOL** | **TEMP (°C)** | **MIN** | **TYP** | **MAX** | **UNITS** |
| **OCXO CHARACTERISTICS** ( Vcc = +12.0V, Power = 5W switch on, 2W stable) | | | | | | | |
| OCXO Output Frequency | | OCXO_OUT_f | 25 | | 82.833333 | | MHz |
| OCXO Frequency Stability (day of despatch) | | OCXO_f1 | 25 | | ±0.01 | | ppm |
| OCXO Frequency Stability (ageing per year) | | OCXO_f2 | 25 | | ±1.0 | | ppm |
| OCXO Temperature Stability (-20 to +60°C) | | OCXO_T_f | 25 | | ±0.025 | | ppm |
| OCXO Output Power Level | | OCXO_OUT_p | 25 | | ±1.5 | | dBm |
| OCXO Output Phase Noise | | OCXO_OUT_pn | 25 | | -105.5 | | dBc/Hz @ 1KHz |

| **LO CHARACTERISTICS** (Vcc = +15V, lcc = +400mA) | | | | | | | |
|---|---|---|---|---|---|---|---|
| LO Input Reference Frequency | | LO_IN_f | 25 | | 82.833333 | | MHz |
| LO Input Reference Power Level | | LO_IN_rp | 25 | -3 | 0 | +3 | dBm |
| LO Output Frequency | | LO_OUT_f | 25 | | 4970 | | MHz |
| LO Output Tuning Range | | LO_OUT_t | 25 | | ±2% | | |
| LO Output Power Level | | LO_OUT_pwr | 25 | | +12 | +13 | dBm |
| LO Output Power Variation | | LO_OUT_var | 25 | | | ±1 | dB |
| LO Output SSB Phase Noise | | LO_OUT_pn | 25 | | -96.2 | | dBc/Hz © 1KHz |
| LO Output Spurious Signals | at 275KHz | LO_OUT_sp1 | 25 | | -73 | | dBc |
| | at 500Hz | LO_OUT_sp2 | 25 | | -55 | | dBc |
| LO Output Harmonics | | LO_OUT_hr | 25 | | -70 | | dBc |
| LO Output Impedance | | LO_OUT_z | 25 | | 50 | | ohm |
| LO Load VSWR | | LO_OUT_SWR | 25 | | 1.50:1 | | |

| **TRANSMIT MIXER CHARACTERISTICS** (LO_IN = 4970MHz/+12dBm, TXM_IF = 815MHz/-10dBm, RS _{IF} = 50Ω, RS _{LO} = 50Ω,RL _{RF} = 50Ω) | | | | | | | |
|---|---|---|---|---|---|---|---|
| IF Input Frequency Range | | TXM_IFf | 25 | DC | | 4000 | MHz |
| RF Output Frequency Range | | TXM_RFf | 25 | 4.5 | | 12 | GHz |
| LO Input Power | | LO_IN_pwr | 25 | | +12 | | dBm |
| Isolation LO-RF | | TXM_LEAK | 25 | +15 | +23 | | dB |
| Conversion Loss | | TXM_CL | 25 | -8.0 | -9.0 | | dB |
| RF VSWR (4.5 to 12GHz) | | TXM_OSWR | 25 | | 4.5:1 | | |
| RF Input Power (1dB Compression) | | TXM_P1D | 25 | | +4 | | dBm |
| RF Input Power (3rd Order Intercept. IP3) | | TXM_IP3 | 25 | | +14 | | dBm |

| **TRANSMIT POWER PRE-AMP CHARACTERISTICS** (PRE_IN = 5785MHz/-20dBm, RS = RL = 50Ω, Vcc = +15V, Icc = 400mA) | | | | | | | |
|---|---|---|---|---|---|---|---|
| Power Pre-Amp Frequency Range | | PRE_f | 25 | 4 | | 8 | GHz |
| Power Gain | | PRE_PG | 25 | +25 | +33 | | dB |
| PRE_AMP Output 1dB Compression | | PRE_P1D | 25 | +25 | +26 | | dBm |
| PRE_AMP Noise Figure | | PRE_NF | 25 | | +2.00 | +2.50 | dB |
| PRE_AMP Output 3rd Order Intercept | | PRE_IP3 | 25 | | +36 | | |
| PRE_AMP 2nd Harmonic at P1dB | | PA_2H | 25 | | -20 | 0 | dBc |
| PRE_AMP 3rd Harmonic at P1dB | | PA-_3H | 25 | | -30 | -10 | dBc |
| PRE_AMP 3rd Order Intermodulation Ratio | | PA_IMR | 25 | | | | dBc |
| PRE_AMP Input VSWR | | PRE_ISWR | 25 | | 1.60:1 | 2.00:1 | |
| PRE_AMP Output VSWR | | PRE_OSWR | 25 | | 1.75:1 | 2.00:1 | |
| PRE_AMP Gain Flatness | | PRE_GF | 25 | | ± 1.75 | | dB |

| **TRANSMIT POWER AMP CHARACTERISTICS** (PA_IN = 5785MHz/-4dBm, RS = RL = 50Ω, Vcc = +15V, Icc = 2800mA) | | | | | | | |
|---|---|---|---|---|---|---|---|
| Power Amp Frequency Range | | PA_f | 25 | 5.4 | | 5.9 | GHz |
| Power Gain | | PA_PG | 25 | +35 | +40.5 | | dB |
| PA_AMP Output 1dB Compression | | PA_P1D | 25 | +37 | +37 | | dBm |
| PA_AMP Noise Figure | | PA_NF | 25 | | +4.10 | +5.00 | dB |
| PA_AMP Output 3rd Order Intercept | | PA_IP3 | 25 | | +51 | | dBm |
| PA_AMP 2nd Harmonic at P1dB | | PA_2H | 25 | | -20 | 0 | dBc |
| PA_AMP 3rd Harmonic at P1dB | | PA_3H | 25 | | -30 | -10 | dBc |
| PA_AMP 3rd Order Intermodulation Ratio | | PA_IMR | 25 | | | | dBc |
| PA_AMP Input VSWR | | PA_ISWR | 25 | | 1.60:1 | 2.00:1 | |
| PA_AMP Output VSWR | | PA_OSWR | 25 | | 1.30:1 | 1.50:1 | |
| PA_AMP Gain Flatness | | PA_GF | 25 | | | +/-1 | dB |

| **TRANSMIT MIXER/POWER PRE-AMP/POWER AMP CASCADED CHARACTERISTICS** (IF = 815MHz/-10dBm, IF Input Attenuator = -11dB, AL1 = -3dB, AL2 = -6dB. one HPA, one channel for IBC'98, four channels for Final Trial) | | | | | | | |
|---|---|---|---|---|---|---|---|
| UHF Input Frequency Range | | UHF_INf | 25 | 755 | | 875 | MHz |
| UHF Input Centre Frequency | | UHF_IN_f | 25 | | 815 | | MHz |
| UHF Input Power | | UHF_IN_pwr | 25 | -20 | -10 | +10 | dBm |
| UHF Input Return Loss | | UHF_IN_RL | 25 | | +14 | | dB |
| RF Output Frequency Range | | RF_OUTf | 25 | 5725 | | 5845 | MHz |
| RF Output Centre Frequency | | RF_OUT_f | 25 | | 5785 | | MHz |
| RF Output Frequency Stability (better than 0.45ppm @ 5785MHz) | | RF_OUT_stab | 25 | | | +/-2.6 | KHz |
| RF Output Return Loss | | RF_OUT_RL | 25 | | +11 | | dB |
| Cascaded Power Gain | | CTX_PG | 25 | | +51.5 | | dB |
| Cascaded Output NF | | CTX_NF | 25 | | +15 | | dB |
| Cascaded Output P1dB | | CTX_P1D | 25 | | +35 | | dBm |
| Cascaded Output 3rd Order Intercept | | CTX_IP3 | 25 | | +45 | | dBm |
| Cascaded Output SSB Phase Noise | | CTX_PN | 25 | | -89.5 | | dBc/Hz @ 1KHz |
| Cascaded Output Power (one channel for IBC'98, four channels for Final Trial) | | CTX_OP | 25 | | +20 | | dBm |
| Cascaded Output Power Gain Control | | CTX_GCTRL | 25 | 0 | | +60 | dB |
| Cascaded Gain Flatness | | CTX_GF | 25 | | | +/-2 | dB |
| Cascaded LO Leakage | | CTX_LEAK | 25 | | -104 | | dBm |
| Cascaded Group Delay (at lower edge of passband) | | GD1 | 25 | | | 15 | ns |
| Cascaded Group Delay (at upper edge of passband) | | GD2 | 25 | | | 30 | ns |
| Cascaded Relative Group Delay (GDR = GD2 - GD1) | | GDR | 25 | | | 15 | ns |

| **POWER SUPPLY UNITS** | | | | | | | |
|---|---|---|---|---|---|---|---|
| AC Voltage Supply Range | | V ac | 25 | 220 | 230 | 240 | Volts |
| AC Supply Current Range | | I ac | 25 | | 5 | | Amps |
| Linear DC Supply Line Regulation | | LINE_REG | 25 | | | 10 | mV |
| Linear DC Supply Ripple Rejection | | RR | 25 | | | 5 | mV |
| Linear DC Supply Load Regulation | | LOAD_REG | 25 | | | 20 | mV |
| SMPS DC Supply Ripple Rejection | | S_RR | 25 | | | 150 | mV |
| SMPS DC Supply Load Regulation | | S_LOAD_REG | 25 | | | ±2 | % |

**Table 2 -**

| Environmental Specifications | | | | | | |
|---|---|---|---|---|---|---|
| | **ALL GRADES** | | | | | |
| **PARAMETER** | **SYMBOL** | **TEMP (°C)** | **MIN** | **TYP** | **MAX** | **UNITS** |
| **TEMPERATURE RANGE** | | | | | | |
| Operating Temperature Range | OTR | | 0 | +25 | +50 | degrees |
| Storage Temperature Range | STR | | -20 | | +70 | degrees |

**Table 3 -**

| Mechanical Specifications | | |
|---|---|---|
| **PARAMETER** | **TYP** | **UNITS** |
| Dimensions | 350 x 390 x 160 | mm |
| Mass | 13.8 | kg |
| RF Connectors | SMA (F) | |
| Mains Connector | IEC (M) | |

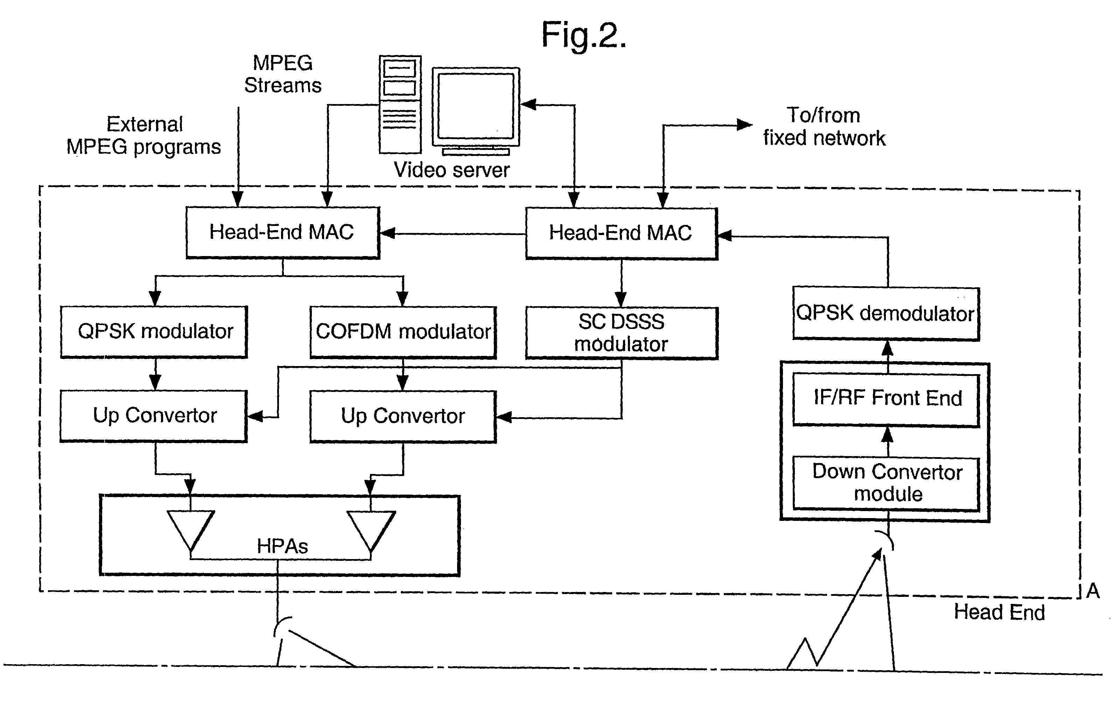

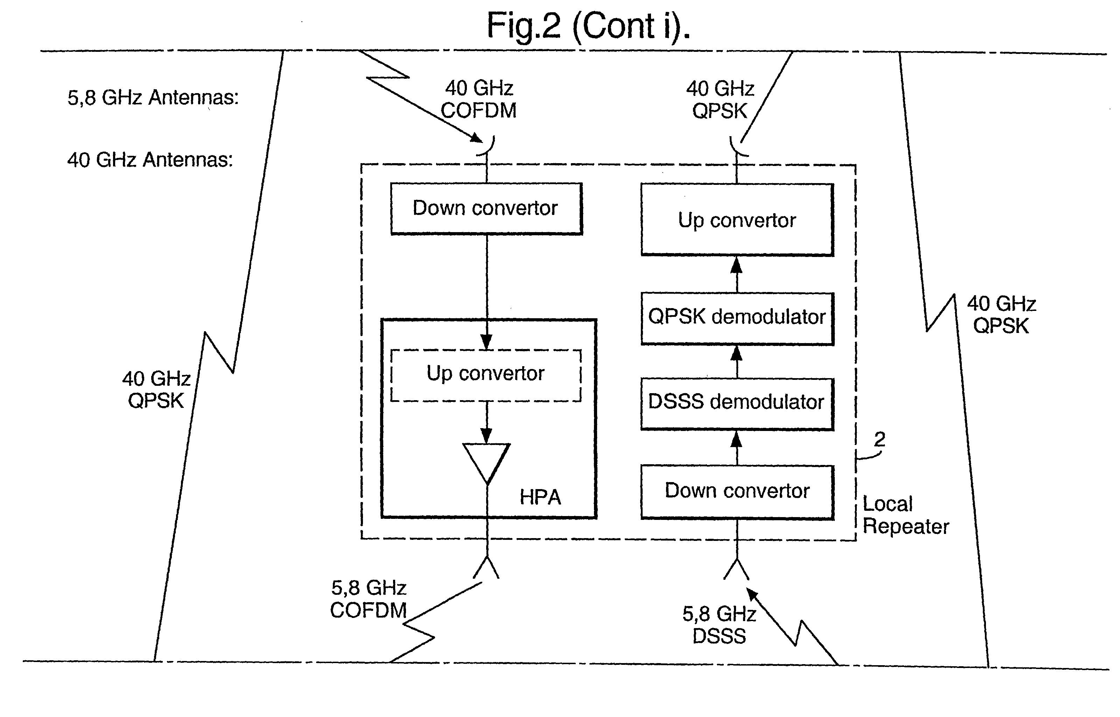

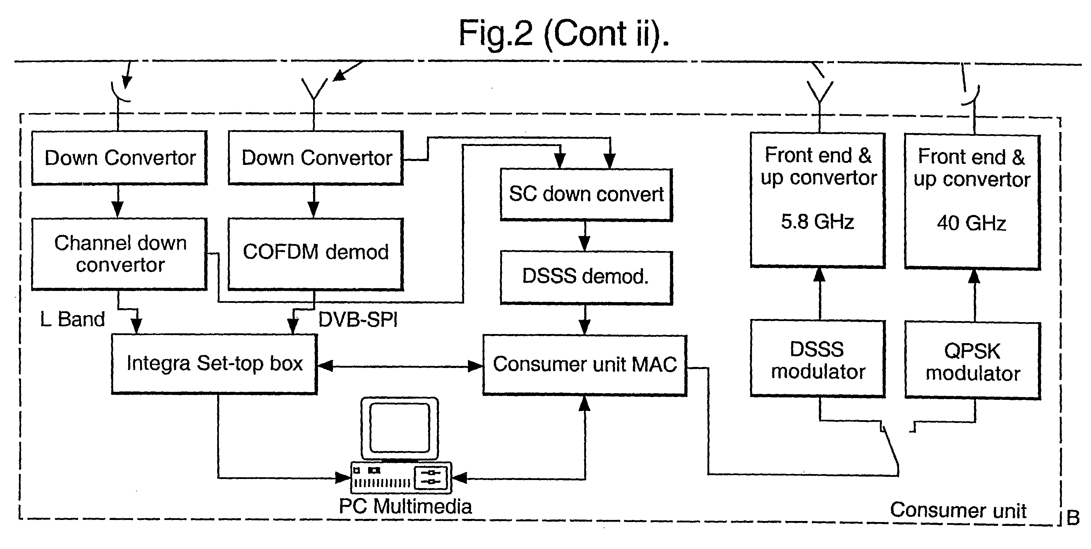

Figure 2 is a diagrammatical, schematic view of a system comprising two users A and B and a repeater 2. In practice there may be many more users, but for simplicity only two are shown. User A (the so called Head End) can communicate to user 3 (the Consumer) via repeater 2 in order, for example, to play interactive television games or perform other two-way communications.

Although the invention has been described by one embodiment only, it will be appreciated that variation may be made to the aforementioned embodiment without departing from the scope of the invention. For example, the transmission of 5.8 GHz signals to fourteen receivers only has been discussed. However, other transmission frequencies and numbers of receivers are possible by varying, respectively, the OCXO 36 and PLO 34 centre frequencies and the bandwidth of the band-pass filters 14, 20 and 28. For example, for 28 users, the bandwidth of the filters 14, 20 and 28 may be increased to 300 MHz. Similarly, although the invention has been described operating in a transmission mode, it may operate equally well in a receiving mode. Therefore the features of the invention may be incorporated into a receiver.

## Claims

1. A method for the transmission of a plurality of coded orthogonal frequency division multiplexed signals, the method including the steps of: a) receiving a plurality of input signals; b) attenuating the input signals; c) band-pass filtering the attenuated signals; d) mixing the band-pass filtered and attenuated signals with a single frequency signal to provide mixed signals in a predetermined bandwith; e) attenuating the mixed signals; f) band-pass filtering the signals attenuated in step e); g) pre-amplifying the band-pass filtered signals from step f); h) attenuating the pre-amplified signals; i) amplifying the attenuated pre-amplified signals; j) band-pass filtering the signals amplified in step i; and k) transmitting the band-pass filtered signals from step j) to a plurality of receivers, so that each receiver, when suitably tuned, receives a separate transmitted signal.

2. A method according to claim 1 wherein the signals are in the microwave region of the electromagnetic spectrum.

3. A method according to claim 2 wherein the step of static discharge protection is provided.

4. A method according to any preceding claim wherein the step of antenna port mismatch protection is provided.

5. Apparatus for the transmission of a plurality of coded orthogonal frequency division multiplexed signals including: a) means for receiving a plurality of input signals; b) first attenuating means (10) for attenuating the said input signals; c) first band-pass filtering means (14) for band-pass filtering the attenuated signals; d) single frequency generation means (32,34,36) for generating a single frequency signal; e) mixing means (16) for mixing the frequency of the first band-pass filtered signals with a single frequency signal to provide mixed signals in a predetermined bandwidth; f) second attenuating means (18) for attenuating the mixed signals; g) second band-pass filtering means (20) for band-pass filtering the attenuated mixed signals; h) pre-amplifying means (22) for pre-amplifying the second band-pass filtered signals; i) third attenuating means (24) for attenuating the pre-amplified signals; j) amplifying means (26) for amplifying the attenuated pre-amplified signals; k) third band-pass filtering means (28) for band-pass filtering the signals amplified in step j); and l) means (40) for transmitting the third band-pass filtered signals to a plurality of receivers, so that each receiver, when suitably tuned, receives a separate transmitted signal.

6. Apparatus according to claim 5 wherein the single frequency generation means (32,34,36) includes a phase-locked oscillator (34), a high-stability oven controlled crystal oscillator (36) and a band-pass filter (32).

7. Apparatus according to claim 5 further including de signal blocking means (38) for protecting the internal RF circuitry from static discharges.

8. Apparatus according to claim 5 wherein the first attenuating means (10) is an input switched intermediate frequency attenuator.

9. Apparatus according to claim 8 wherein the input switched intermediate frequency attenuator operates in the 0 dB to -70 dB range.

10. Apparatus according to claim 5 wherein the mixing means (16) is a double balanced transmit mixer.

11. Apparatus according to claim 5 further including antenna port mismatch protection means (30).

12. Apparatus according to claim 11 wherein the antenna port mismatch protection means (30) is a circulator.

## Patentansprüche

1. Verfahren zur Übertragung einer Vielzahl kodierter, mit orthogonaler Frequenzteilung gemultiplexter Signale, wobei das Verfahren die Schritte umfasst: a) Empfangen einer Vielzahl von Eingangssignalen; b) Dämpfen der Eingangssignale; c) Bandpassfiltern der gedämpften Signale; d) Mischen der bandpassgefilterten und gedämpften Signale mit einem Einzel-Frequenz-Signal zum Erzeugen gemischter Signale in einer vorbestimmten Bandbreite; e) Dämpfen der gemischten Signale; f) Bandpassfiltern der in Schritt e) gedämpften Signale; g) Vorverstärken der bandpassgefilterten Signale von Schritt f); h) Dämpfen der vorverstärkten Signale; i) Verstärken der gedämpften vorverstärkten Signale; j) Bandpassfiltern der in Schritt i verstärkten Signale; und k) Übertragen der bandpassgefilterten Signale von Schritt j) zu einer Vielzahl von Empfängern, so dass jeder Empfänger, wenn er in geeigneter Weise abgestimmt ist, ein separates übertragenes Signal empfängt.

2. Verfahren nach Anspruch 1, wobei die Signale im Mikrowellenbereich des elektromagnetischen Spektrums angesiedelt sind.

3. Verfahren nach Anspruch 2, wobei der Schritt statischen Entladungsschutzes vorgesehen ist.

4. Verfahren nach einem der vorhergehenden Ansprüche, wobei der Schritt des Schutzes vor Antennen-Anschluss-Fehlanpassung durchgeführt wird.

5. Vorrichtung zur Übertragung einer Vielzahl kodierter, mit orthogonaler Frequenzteilung gemultiplexter Signale umfassend: a) Mittel zum Empfangen einer Vielzahl von Eingangssignalen; b) erste Dämpfungsmittel (10) zum Dämpfen dieser Eingangssignale; c) erste Bandpassfilter-Mittel (14) zum Bandpassfiltern der gedämpften Signale; d) Einzel-Frequenz-Erzeugungs-Mittel (32, 34, 36) zum Erzeugen eines einzelnen Einzel-Frequenz-Signals; e) Mischmittel (16) zum Mischen der Frequenz des ersten bandpassgefilterten Signals mit einem Einzel-Frequenz-Signal zum Erzeugen gemischter Signale in einer vorbestimmten Bandbreite; f) zweite Dämpfungsmittel (18) zum Dämpfen der gemischten Signale; g) zweite Bandpassfilter-Mittel (20) zum Bandpassfiltern der gedämpften gemischten Signale; h) Vorverstärker-Mittel (22) zum Vorverstärken der zweiten bandpassgefilterten Signale; i) dritte Dämpfungsmittel (24) zum Dämpfen der vorverstärkten Signale; j) Verstärkungsmittel (26) zum Verstärken der gedämpften vorverstärkten Signale; k) dritte Bandpassfilter-Mittel (28) zum Bandpassfiltern der in Schritt j) verstärkten Signale; und l) Mittel (40) zum Übertragen der dritten bandpassgefilterten Signale zu einer Vielzahl von Empfängern, so dass jeder Empfänger, wenn er in geeigneter Weise abgestimmt ist, ein separates übertragenes Signal empfängt.

6. Vorrichtung nach Anspruch 5, wobei die Einzel-Frequenz-Erzeugungs-Mittel (32, 34, 36) einen phasenverriegelten Oszillator (34), einen mittels hoch-stabilen thermostabilisierten Kristall-Oszillator (36) und ein Bandpassfilter (32) umfassen.

7. Vorrichtung nach Anspruch 5, umfassend ferner Gleichstrom-Signal-Blockierungs-Mittel (38) zum Schutz der internen HF-Schaltung vor statischen Entladungen.

8. Vorrichtung nach Anspruch 5, wobei die ersten Dämpfungsmittel (10) aus einem eingangs-geschalteten Zwischenfrequenz-Dämpfungsglied bestehen.

9. Vorrichtung nach Anspruch 8, wobei das eingangsgeschaltete Zwischenfrequenz-Dämpfungsglied im Bereich zwischen 0 dB bis -70 dB arbeitet.

10. Vorrichtung nach Anspruch 5, wobei die Mischmittel (16) aus einem doppelt symmetrischen Übertragungs-Mischer bestehen.

11. Vorrichtung nach Anspruch 5, enthaltend ferner Mittel (30) zum Schutz vor Antennen-Anschluss-Fehlanpassung.

12. Vorrichtung nach Anspruch 11, wobei die Mittel (30) zum Schutz vor Antennen-Durchlass-Fehlanpassung aus einem Zirkulator bestehen.

## Revendications

1. Procédé pour la transmission d'une pluralité de signaux codés orthogonaux multiplexés en fréquence, le procédé comprenant les étapes consistant à : a) recevoir une pluralité de signaux d'entrée ; b) atténuer les signaux d'entrée ; c) soumettre les signaux atténués à un filtrage passe-bande ; d) mélanger les signaux atténués et qui ont subi un filtrage passe-bande avec un signal monofréquence afin d'obtenir des signaux mélangés dans une bande passante prédéterminée ; e) atténuer les signaux mélangés ; f) soumettre les signaux atténués à l'étape e) à un filtrage passe-bande ; g) pré-amplifier les signaux qui ont subi un filtrage passe-bande à l'étape f) ; h) atténuer les signaux pré-amplifiés ; i) amplifier les signaux pré-amplifiés atténués ; j) soumettre les signaux amplifiés à l'étape i) à un filtrage passe-bande ; et k) transmettre les signaux qui ont subi un filtrage passe-bande à l'étape j) à une pluralité de récepteurs, de sorte que chaque récepteur, lorsqu'il est accordé de manière appropriée, reçoive un signal transmis séparé.

2. Procédé selon la revendication 1, dans lequel les signaux sont dans la région des hyperfréquences du spectre électromagnétique.

3. Procédé selon la revendication 2, dans lequel l'étape de protection contre les décharges statiques est prévue.

4. Procédé selon l'une quelconque des revendications précédentes, dans lequel l'étape de protection contre les désadaptations de port d'antenne est prévue.

5. Dispositif pour la transmission d'une pluralité de signaux codés orthogonaux multiplexés en fréquence comprenant : a) des moyens pour recevoir une pluralité de signaux d'entrée ; b) des premiers moyens d'atténuation (10) pour atténuer lesdits signaux d'entrée ; c) des premiers moyens de filtrage passe-bande (14) pour soumettre les signaux atténués à un filtrage passe-bande ; d) des moyens de génération de fréquence unique (32, 34, 36) pour générer un signal monofréquence ; e) des moyens de mélange (16) pour mélanger la fréquence des premiers signaux qui ont subi un filtrage passe-bande avec un signal monofréquence afin d'obtenir des signaux mélangés dans une bande passante prédéterminée ; f) des deuxièmes moyens d'atténuation (18) pour atténuer les signaux mélangés ; g) des deuxièmes moyens de filtrage passe-bande (20) pour soumettre les signaux mélangés atténués à un filtrage passe-bande ; h) des moyens de pré-amplification (22) pour pré-amplifier les deuxièmes signaux qui ont subi un filtrage passe-bande ; i) des troisièmes moyens d'atténuation (24) pour atténuer les signaux pré-amplifiés ; j) des moyens d'amplification (26) pour amplifier les signaux pré-amplifiés atténués ; k) des troisièmes moyens de filtrage passe-bande (28) pour soumettre les signaux amplifiés à l'étape j) à un filtrage passe-bande ; et l) des moyens (40) pour transmettre les troisièmes signaux qui ont subi un filtrage passe-bande à une pluralité de récepteurs, de sorte que chaque récepteur, lorsqu'il est accordé de manière appropriée, reçoive un signal transmis séparé.

6. Dispositif selon la revendication 5, dans lequel les moyens de génération de fréquence unique (32, 34, 36) comprennent un oscillateur verrouillé en phase (34), un oscillateur à quartz contrôlé par une enceinte isotherme à haute stabilité (36) et un filtre passe-bande (32).

7. Dispositif selon la revendication 5, comprenant en outre des moyens de blocage de signal (38) pour protéger les éléments de circuit radiofréquences internes des décharges statiques.

8. Dispositif selon la revendication 5, dans lequel les premiers moyens d'atténuation (10) sont un atténuateur de fréquence intermédiaire commuté d'entrée.

9. Dispositif selon la revendication 8, dans lequel l'atténuateur de fréquence intermédiaire commuté d'entrée fonctionne dans la plage de 0 dB à -70 dB.

10. Dispositif selon la revendication 5, dans lequel les moyens de mélange (16) sont un mélangeur de transmission équilibré double.

11. Dispositif selon la revendication 5, comprenant en outre des moyens de protection contre les désadaptations de port d'antenne (30).

12. Dispositif selon la revendication 11, dans lequel les moyens de protection contre les désadaptations de port d'antenne (30) sonL un circulateur.
